# FASCICULE DE BREVET EUROPEEN

(11) **EP 2 138 215 B1**
(45) Date de publication et mention de la délivrance du brevet: **27.05.2015**
(21) Numéro de dépôt: 09290424.2
(22) Date de dépôt: 10.06.2009
(51) Int. Cl.: B01D 15/22, B01D 15/18, G01N 30/60, B01J 8/04, B01J 8/02

(54) **Système de distribution et de collecte dans une colonne multiétagée permettant d'égaliser les temps de séjour sur chaque étage**
Vorrichtung zur Verteilung eines Fluides in einer mehrstufigen Kolonne und zur Vergleichmässigung der Verweilzeiten auf jeder Stufe
Fluid distribution device in a multistep column to egalize residence times at each step

(30) Priorité: 27.06.2008 FR 0803693
(43) Date de publication de la demande: 30.12.2009
(73) Titulaire: IFP Energies nouvelles, 92852 Rueil-Malmaison Cedex (FR)
(72) Inventeur: Augier Fréderic, 69360 Saint Symphorien d'Ozon (FR); Darmancier, Denis, 38200 Vienne (FR)

(56) Documents cités:
- EP-A- 0 769 316
- EP-A- 1 325 772
- WO-A-2006/055222
- FR-A- 2 740 054
- US-B1- 6 471 861

## Description

### DOMAINE DE L'INVENTION

L'invention concerne un nouveau dispositif de distribution et de collecte de fluides au sein d'une colonne multi étagée mettant en oeuvre un écoulement desdits fluides dans un milieu de particules solides, appelé milieu granulaire.

On appelle colonne multi étagée une colonne constituée d'une multiplicité de plateaux disposés selon un axe sensiblement vertical, chaque plateau (dit plateau support) supportant un lit de solide granulaire, et les différents lits successifs étant traversés en série par le ou les fluides mis en oeuvre dans la colonne. Le fluide traversant les lits successifs est appelé fluide principal pour le distinguer d'autres fluides, dits secondaires, qui peuvent être ajoutés au fluide principal par l'intermédiaire de plateaux généralement situés entre deux lits successifs et appelés plateaux distributeurs.

Chaque lit est en général alimenté par un plateau distributeur situé en amont dudit lit.

Dans la suite du texte, lorsqu'on parle par abréviation de plateaux, il s'agit de plateaux distributeur.

Un plateau distributeur comprend typiquement un réseau d'amenée ou de collecte de fluides, dit réseau de distribution, et une ou plusieurs boites de mélange destinées à mélanger le fluide injecté ou soutiré par l'intermédiaire du réseau de distribution avec le fluide principal.

### EXAMEN DE L'ART ANTERIEUR

Dans les procédés multi étagés de type réacteurs ou colonnes de séparation, les dispositifs de distribution mis en oeuvre peuvent avoir plusieurs fonctions comme l'injection ou le soutirage d'un débit de fluide dans le réacteur ou la colonne à un niveau quelconque de ladite colonne. Il est généralement souhaité que cette fonction d'injection ou de soutirage soit réalisée de manière équilibrée entre les différentes régions de la section de colonne.

En effet, la section de la colonne est généralement divisée en un certain nombre de secteurs ou panneaux, chaque secteur devant être irrigué de manière homogène, par rapport aux autres. Ceci nécessite l'utilisation de distributeurs à géométrie particulière, pouvant atteindre chaque secteur et délivrant (ou prélevant) un débit approximativement égal sur chacun des secteurs, si ceux-ci sont de surfaces égales. Si les secteurs sont de surfaces différentes, les débits injectés ou prélevés sont approximativement proportionnels à la surface des secteurs associés.

Les plateaux remplissent également une fonction de mélange entre l'écoulement principal dans la colonne et le ou les flux secondaires injectés par le réseau, de manière à alimenter les plateaux en aval avec un fluide à concentration homogène. Concernant les procédés de séparation par adsorption en colonnes multi étagées, de type chromatographie ou en lit mobile simulé (LMS), les brevets WO 2006/027118A1, US 2006/0108274 A1, EP0074815, FR9309593 fournissent des exemples de configurations de plateaux distributeurs.

Le réseau de distribution affecté à un plateau alimente ledit plateau en un nombre limité de points d'injection. Compte tenu de la division du plateau en panneaux, un point d'injection par panneau est généralement utilisé, mais deux ou trois points par panneau sont également parfaitement utilisables.

Les panneaux sont généralement conçus de manière à favoriser le mélange entre le flux principal issu du lit supérieur et le flux secondaire injecté via le réseau de distribution. Pour cela, les panneaux sont ouverts sur une faible fraction de leur surface, de telle manière que le flux principal s'écoule à proximité du point d'injection du réseau dans le panneau. Ainsi les deux flux principal et secondaire, se mélangent avant d'être redistribués sur la totalité (ou la quasi totalité) de la surface des panneaux.

La collecte du flux sortant du lit en amont du plateau, puis la redistribution de ce flux sur la section du plateau est une opération qui doit générer le minimum de dispersion axiale de manière à garder l'écoulement aussi proche que possible d'un écoulement piston. Ceci est particulièrement important concernant les procédés de séparation en lit mobile simulé (LMS). La dispersion axiale induite par les plateaux est en grande partie due à la distribution de temps de séjour dans les zones de collecte et de redistribution. Le temps de séjour d'une ligne fluide dans le plateau dépend en effet principalement des positions d'entrée et de sortie de ladite ligne au niveau du plateau, comme cela est expliqué plus loin.

Contrairement aux écoulements stationnaires en lit fixe, où l'on recherche un écoulement piston à la traversée du milieu granulaire sans se préoccuper de la nature de l'écoulement dans le dispositif de distribution en entrée ou de collecte en sortie de lit, dans les écoulements visés dans la présente invention, il est essentiel de rechercher un écoulement piston aussi bien dans le milieu granulaire qu'à la traversée des dispositifs de distribution et de collecte. Dans un procédé d'adsorption en LMS, les espèces sont séparées par passage dans le lit de particules (ou adsorbant), mais tout écart à l'écoulement piston en dehors du lit tend à remélanger les espèces et donc à dégrader les performances de séparation.

Une façon de limiter la dispersion induite par les plateaux est d'utiliser un grand nombre de divisions en secteurs ou panneaux, avec par conséquent un grand nombre de points d'alimentation du réseau sur les plateaux. Ceci permet de minimiser les distances à parcourir par le fluide depuis l'ouverture des panneaux jusqu'aux différentes régions du lit de particule solides, et donc de minimiser la dispersion induite par les plateaux. Cette solution génère une augmentation des coûts de fabrication des plateaux.

### DESCRIPTION SOMMAIRE DES FIGURES

La figue 1A, selon l'art antérieur, est une représentation de la division de plateaux en panneaux méridiens.
La figure 1B, selon l'art antérieur, est une représentation schématique d'un panneau méridien de plateau distributeur
La figure 2A, selon l'invention, donne une représentation en coupe d'un panneau méridien équipé d'une chicane placée au-dessous du baffle de collecte.
La figure 2B, selon l'invention, donne une représentation en coupe d'un panneau méridien équipé d'une chicane placée au-dessus du baffle de collecte.
La figure 3A illustre l'écoulement du fluide dans un lit de particules lorsque des panneaux selon l'art antérieur sont utilisés.
La figure 3B donne une représentation schématique des temps de séjour associés à différentes lignes de courant dans un lit de particules lorsque des panneaux selon l'art antérieur sont utilisés.
La figure 3C illustre l'écoulement du fluide dans lit de particules lorsque des panneaux selon l'invention sont utilisés.
La figure 3D donne une représentation schématique des temps de séjour associés à différentes lignes de courant dans un lit de particules lorsque des panneaux selon l'invention sont utilisés.

### DESCRIPTION SOMMAIRE DE L'INVENTION

Le problème que cherche à résoudre la présente invention est celui de l'amélioration de l'écoulement des fluides à l'intérieur d'une colonne comportant une multiplicité de plateaux portant chacun un lit de solide granulaire, dite colonne multi étagée.

L'amélioration de l'écoulement dans le présent contexte signifie que l'écoulement se rapproche au mieux d'un écoulement piston, c'est à dire d'un écoulement dans lequel la dispersion axiale du fluide traversant les différents lits successifs de la colonne est la plus faible possible, y compris à la traversée des dispositifs de distribution et de collecte du ou desdits fluides.

La présente invention a pour objectif de minimiser la dispersion générée par les plateaux distributeurs en optimisant la disposition des zones de collecte et d'injection des lits. L'invention à pour objet la mise en oeuvre de plateaux distributeurs permettant de positionner en quinconce les zones d'alimentation et de collecte propres à chaque lit, afin de minimiser la distribution des temps de séjour entre deux plateaux distributeurs. Deux réalisations de l'invention sont développées :

En équipant les panneaux composant les plateaux d'une chicane disposée de manière adéquate, la distribution de temps de séjour dans les plateaux présente une dispersion axiale fortement réduite. Par l'effet d'une chicane correctement disposée, la répartition des temps de séjours des différentes lignes fluides dans la zone d'alimentation en entrée de lit, et dans la zone de collecte en sortie de lit se trouve globalement équilibrée.

Ainsi les différentes lignes fluide traversant un lit granulaire depuis le panneau d'entrée jusqu'au panneau de sortie inclus auront des temps de séjour sensiblement identiques.

Les plateaux distributeurs sont généralement divisés en panneaux indépendants, fonctionnant en parallèle, chaque panneau traitant une fraction de l'écoulement dit principal venant du lit supérieur.

La présente invention s'applique à tout ou partie des panneaux divisant la section de la colonne. L'invention s'applique également à un plateau non divisé dans la mesure où ce cas est équivalent à celui d'un panneau unique constituant à lui seul le plateau.

Les panneaux comportent généralement une plaque, ou baffle de collecte, partiellement ouvert servant à collecter le flux principal sortant du lit supérieur afin de faciliter le mélange avec un flux secondaire injecté dans le panneau.

L'invention a pour objectif de positionner en quinconce les zones de collecte du flux entrant dans un lit et les zones de collecte du flux sortant du même lit de solide granulaire. L'invention est réalisée en intégrant aux panneaux un élément appelé chicane pleine permettant d'acheminer le flux principal, avant ou après son passage à travers le baffle de collecte, dans les zones latéralement éloignées de l'ouverture du baffle. On entend par plein le fait que la chicane ne présente aucune porosité et oblige ainsi la totalité du flux à la contourner.

De façon plus précise, l'invention consiste en un dispositif de distribution d'un fluide alimentant au moins un lit granulaire d'une colonne multi étagée présentant une succession de plateaux, chaque plateau (P) soutenant un lit de solide granulaire, et étant divisé en panneaux méridiens adjacents, notés (Pa) couvrant la totalité de la section de la colonne, ledit dispositif étant appliqué à une partie au moins des panneaux (Pa) du plateau (P), le dit dispositif comportant :
a) une grille ou plaque perforée appelée grille supérieure (6) servant à supporter le lit de particules (2) situé au-dessus du plateau,
b) un baffle de collecte (5) ouvert en son centre,
c) une chicane (9) placée entre le baffle de collecte (5) et le distributeur (7), position dite P1,
d) un distributeur (7) composé d'une grille ou d'une plaque perforée permettant de redistribuer le flux sortant du panneau sur la totalité de la surface du lit de particules situé en dessous du panneau,
e) un brise jet (8) posé au-dessus ou au-dessous du distributeur (7), et placé aux bords du panneau (Pa),
la distance entre l'extrémité de la chicane (9) et le bord du plateau (P) étant comprise entre 5 et 200 mm, l'épaisseur de la chicane étant comprise entre 0,5 mm et 10 mm.

Dans une variante du dispositif selon l'invention, la distance entre l'extrémité de la chicane (9) et le bord du plateau (P) est comprise entre 10 et 50 mm, l'épaisseur de la chicane étant comprise entre 1 et 3 mm.

Le dispositif selon l'invention s'applique à des panneaux (Pa) de type méridien, c'est à dire rectangulaires, orientés selon une même direction en longueur, et ayant sensiblement la même largeur.

### Nouvelle page 6

L'invention peut également être décrite comme un procédé de séparation en lit mobile simulé faisant appel au dispositif selon l'invention, dans lequel la charge à séparer est un mélange quelconque de composés aromatiques ayant de 7 à 9 atomes de carbone.

L'invention peut encore être vue comme un procédé de séparation en lit mobile simulé faisant appel au dispositif selon l'invention, dans lequel la charge à séparer est un mélange de normales et d'iso paraffines.

L'invention peut être décrite comme un procédé de séparation en lit mobile simulé faisant appel au dispositif selon l'invention, dans lequel la charge à séparer est un mélange de normales et d'iso oléfines.

L'invention peut encore être décrite comme un procédé de séparation en lit mobile simulé faisant appel au dispositif selon l'invention, dans lequel le fluide principal traversant ledit dispositif a une masse volumique comprise entre 600 et 950 kg/m³ et une viscosité comprise entre 0,1 et 0,6 cPo.

### DESCRIPTION DETAILLEE DE L'INVENTION

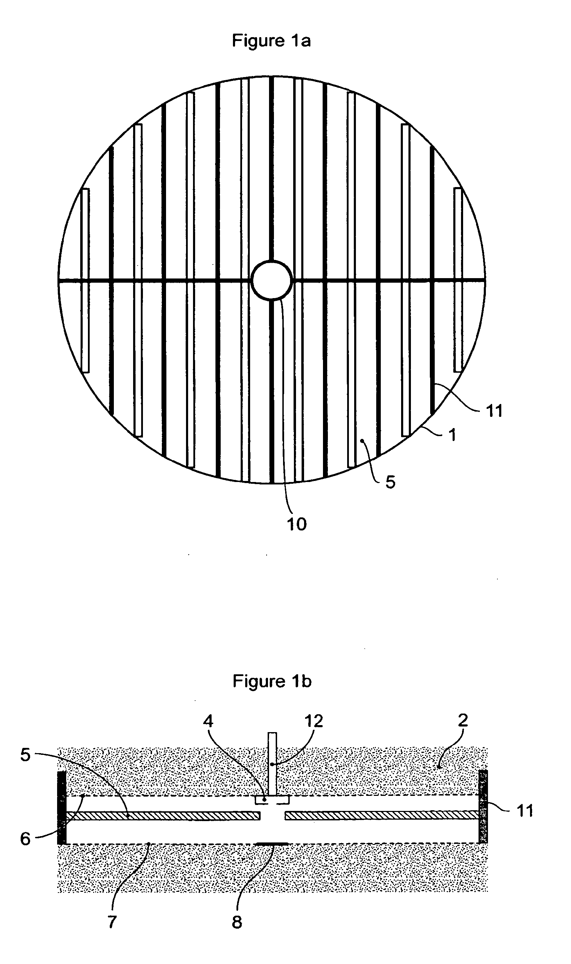

La figure 1A représente une section de colonne(1) divisée en une multitude de panneaux (11) de forme approximativement rectangulaire adjacents les uns aux autres et orientés selon une même direction correspondant à la longueur. La dimension perpendiculaire à la longueur d'un panneau dans le plan correspondant à une section de colonne est dite largeur du panneau. Généralement l'ensemble des panneaux méridiens couvrant une section de colonne a une largeur commune et différentes longueurs. Ce type de panneau est appelé par la suite panneau méridien. La colonne est équipée d'un mât central (10) duquel partent, perpendiculairement à l'axe du mat, des poutres de soutien. Les panneaux sont composés d'un cadre les délimitant, d'un baffle de collecte (5) ouvert selon une bande située approximativement au centre dudit panneau, selon la dimension de longueur dudit panneau, et s'étendant sur toute sa longueur.

La figure 1B est une coupe d'un panneau méridien selon l'art antérieur. Le panneau méridien comporte une grille ou plaque perforée appelée grille supérieure (6) servant à supporter le lit de particules (2) situé au-dessus du plateau, tout en permettant le passage du flux principal sortant du lit. Le panneau comporte aussi un baffle de collecte (5) ouvert en son centre, un distributeur (7) composé d'une grille ou d'une plaque perforée permettant de redistribuer le flux sortant du panneau sur la totalité de la surface du lit de particules situé en dessous du panneau.

Le distributeur (7) est souvent équipé d'une plaque brise-jet (8) destinée à éviter la pénétration d'un jet de fluide dans la zone du lit située sous l'ouverture du baffle de collecte (5).

Le panneau comporte aussi un système de distribution permettant d'injecter ou de collecter un flux secondaire dans le panneau. Le système de distribution est composé d'un réseau de conduites (12) acheminant le flux secondaire, et d'une boite d'injection (4) située à proximité de l'ouverture du baffle de collecte (5). La boite d'injection (4) est positionnée de manière à permette un bon mélange avec le flux principal dans le panneau avant redistribution dans le lit inférieur.

Dans ce type de panneau, toute ligne fluide sortant du lit supérieur passe à travers le baffle de collecte (5) au bout d'un certain temps, ce temps dépendant de la position de sortie de la ligne fluide vis à vis de l'ouverture du baffle. La ligne fluide sortant du lit juste au dessus de l'ouverture du baffle de collecte (5) atteint plus vite l'ouverture dudit baffle que la ligne fluide provenant du bord du panneau. De même, la ligne fluide entrant dans le lit inférieur sous l'ouverture du baffle de collecte (5) passe moins de temps dans le panneau que la ligne fluide entrant dans le lit inférieur par le bord de panneau. Le terme "bord du panneau" est à prendre au sens de la largeur dudit panneau. Donc, selon les lignes de courant suivies par le fluide dans le panneau, (que nous appelons ligne fluide par simplification), le temps de séjour passé dans le panneau peut varier d'une façon assez importante.

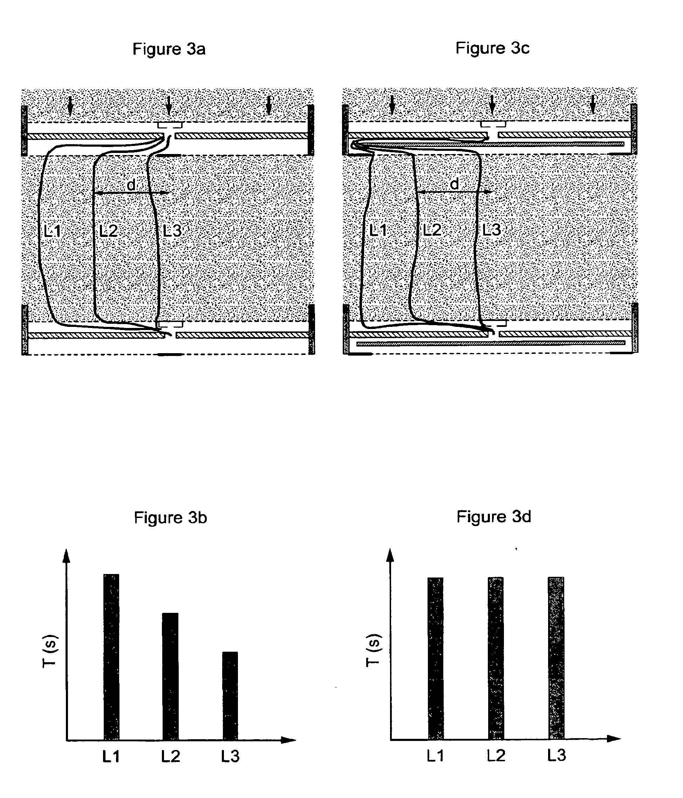

Ce phénomène produit une dispersion axiale dans la colonne, qui peut être néfaste aux performances du dispositif. Des exemples de différentes lignes fluides et les temps de séjour correspondant sont illustrés sur les figures 3A et 3B qui correspondent à la situation de l'art antérieur.

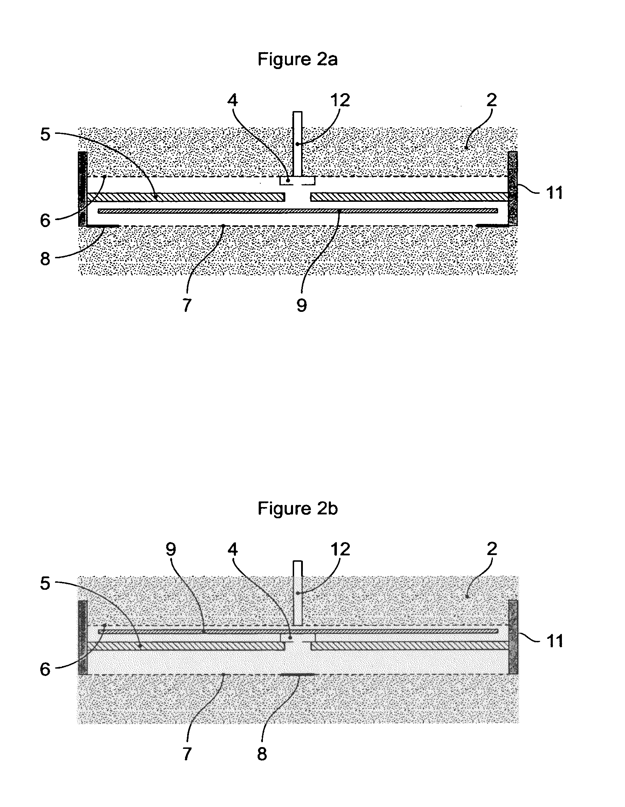

Les figures 2A et 2B représentent une coupe d'un panneau méridien selon l'invention. Les panneaux sont identiques à ceux schématisés en figure 1B selon l'art antérieur, sauf qu'ils comportent un nouvel élément appelé chicane (9) pouvant être positionnée au dessus ou en dessous du baffle de collecte (5).

En figure 2A la chicane (9) est positionnée en dessous du baffle de collecte (5), ( position dite P1), de manière à ce que le fluide sortant du baffle soit acheminé dans les zones du panneau les plus éloignées du centre, c'est à dire les plus éloignées de l'ouverture dudit baffle. Ainsi le fluide sortant du panneau entre dans le lit inférieur par les zones excentrées du panneau, puis se répartit sur toute la surface du lit. Les plaques brise-jet (8) sont positionnées sur le distributeur dans les zones de fortes vitesses, donc au voisinage des extrémités de la chicane (9).

La figure 2B correspond au cas où la chicane (9) est positionnée au dessus du baffle de collecte (5), (position dite P2). Dans ce cas, la chicane (9) achemine le fluide vers l'extrémité de la largeur du panneau. Le fluide est ensuite collecté par le baffle de collecte (5) puis redistribué à partir du centre sur la section du panneau.

La figure 3A donne une représentation d'un lit de particules solides compris entre deux panneaux alignés selon l'art antérieur. On entend par panneaux alignés, deux panneaux successifs au sens de l'écoulement du fluide, et situés en vis à vis.

Sur la figure 3A sont représentées 3 lignes de fluide L1, L2 et L3. Les lignes fluides sont les trajets suivis par différents éléments de fluide sortant du baffle de collecte (5) du panneau supérieur. Les lignes fluides sont approximativement parallèles à travers le lit de particules du fait de la forte perte de charge dans le lit.

Le fluide entrant dans le lit à une certaine distance d du centre du panneau, sort du lit approximativement à la même distance d du centre du panneau suivant.

En conséquence, les différentes lignes fluides ont des temps de séjour T entre les deux baffles de collecte successifs présentant des différences significatives, comme représenté en figure 3B. Par exemple, le fluide suivant la ligne de courant L1 a un temps de séjour T plus élevé que le fluide suivant la ligne de courant L3, car le fluide qui suit la ligne L1 passe un temps non négligeable dans les zones de collecte et de redistribution en amont.

La figure 3C donne une représentation d'un lit de particules solides compris entre deux panneaux alignés selon l'invention. La chicane (9) est ici positionnée en dessous du baffle de collecte. Du fait de la présence de la chicane (9), les lignes fluides sont acheminées en bord de panneau avant d'être distribuées sur la section du lit. Les lignes fluides L1, L2 et L3 ont maintenant des temps de séjour T proches, comme schématisé en figure 3D.

Quelle que soit la distance d du point d'entrée du fluide par rapport au centre du panneau, le temps de séjour global d'une ligne fluide entre deux baffles de collecte successifs est approximativement identique.

La chicane (9) a donc un effet d'égalisation du temps de séjour des différentes lignes fluides, quelle que soit leur distance d d'entrée dans le lit granulaire.

La chicane positionnée au dessus ou au dessous du baffle de collecte peut être réalisée par toute plaque pleine de largeur strictement inférieure à la largeur du panneau, et de longueur sensiblement égale à celle du panneau, de telle manière que l'espace libre situé entre l'extrémité de la chicane et le bord du panneau soit d'une surface proche de la moitié de celle l'ouverture dans le baffle (5). Ainsi la vitesse de passage du liquide de part et d'autre de la chicane sera proche de la vitesse du liquide au passage du baffle (5), car le débit liquide passera dans des surfaces ouvertes proches. La distance entre l'extrémité de la chicane et le bord du panneau est comprise entre 5 et 200 mm, et préférentiellement entre 10 et 50 mm. L'épaisseur de la chicane est comprise entre 0,5 et 10 mm, et préférentiellement entre 1 et 3 mm.

### EXEMPLE

L'efficacité de l'invention a été testée sur des essais en maquette. La maquette reproduit un lit de particules solides compris entre deux panneaux selon l'art antérieur d'une part, et selon l'invention d'autre part, tels que représentés en figure 3A et 3C.

La maquette reproduit la géométrie entre les deux baffles de collecte. La largeur du panneau méridien est de 1,2 m, la hauteur de lit est de 1,2 m. La profondeur de la maquette est de 18 cm. Le baffle de collecte est perforé selon des trous de 30 mm de diamètre et distants de 60 mm centre à centre. La distance entre la grille supérieure et le baffle de collecte est de 10 mm. La distance entre le baffle de collecte et le distributeur est de 20 mm.

La chicane utilisée a 1 mm d'épaisseur, et est positionnée à 5 mm au dessous du baffle de collecte.

La chicane a 1,1 m de large, donc est ouverte de 5 cm de chaque coté du panneau.

La maquette est remplie de billes de verre de 1 mm de diamètre jusqu'à une hauteur de 10 mm sous le distributeur.

La maquette est alimentée en eau avec une vitesse superficielle équivalente de 1,5 cm/s. Pour chaque configuration (avec/sans chicane) l'hydrodynamique est caractérisée par des mesures de Distribution de Temps de Séjour (DTS).

La méthode de DTS est expliquée dans de nombreux ouvrages, dont "Génie de la réaction Chimique" de D.Scweich, 2001, éditions Tec&Doc, Par*is.* Les résultats sont représentés sous forme de nombre de Peclet (Pe) qui exprime le rapport entre les vitesses d'écoulement par convection et par diffusion. Plus le nombre de Peclet (Pe) est élevé, plus la dispersion axiale est faible entre les deux baffles de collecte, donc plus l'écoulement se rapproche d'un écoulement piston (c'est à dire, précisément, sans mélange axiale des tranches fluides en écoulement).

Les résultats sont reportés en table 1.

**Table 1 : Comparatif de l'hydrodynamique avec ou sans chicane**

| **CONFIGURATION** | **Peclet** |
|---|---|
| SANS CHICANE | 200 |
| AVEC CHICANE | 350 |

Ces résultats montrent que l'invention permet une amélioration très significative ( augmentation du nombre de Peclet de + 75%) de l'hydrodynamique dans les colonnes multi étagées.

## Revendications

1. Dispositif de distribution d'un fluide alimentant au moins un lit granulaire d'une colonne multi étagée présentant une succession de plateaux, chaque plateau (P) soutenant un lit de solide granulaire, et étant divisé en panneaux méridiens adjacents, c'est à dire rectangulaires, orientés selon une même direction en longueur et ayant sensiblement la même largeur, lesdits panneaux notés (Pa) couvrant la totalité de la section de la colonne, ledit dispositif étant appliqué à une partie au moins des panneaux (Pa) du plateau (P), le dit dispositif comportant dans une position P1 et dans le sens d'écoulement du fluide:
a) une grille ou plaque perforée appelée grille supérieure (6) servant à supporter le lit de particules (2) situé au dessus du plateau,
b) un baffle de collecte (5) ouvert en son centre,
c) une chicane (9) placée entre le baffle de collecte (5) et le distributeur (7), position dite P1,
d) un distributeur (7) composé d'une grille ou d'une plaque perforée permettant de redistribuer le flux sortant du panneau sur la totalité de la surface du lit de particules situé en dessous du panneau,
e) un brise jet (8) posé au dessus ou au dessous du distributeur (7), et placé aux bords du panneau (Pa),
la distance entre l'extrémité de la chicane (9) et le bord du plateau (P) étant comprise entre 5 et 200 mm, l'épaisseur de la chicane étant comprise entre 0,5 mm et 10 mm.

2. Dispositif de distribution d'un fluide alimentant au moins un lit granulaire d'une colonne multi étagée présentant une succession de plateaux, selon la revendication 1 dans lequel la distance entre l'extrémité de la chicane (9) et le bord du plateau (P) est comprise entre 10 et 50 mm, l'épaisseur de la chicane étant comprise entre 1 et 3 mm.

3. Procédé de séparation en lit mobile simulé faisant appel au dispositif selon l'une quelconque des revendications 1 ou 2, dans lequel la charge à séparer est un mélange quelconque de composés aromatiques ayant de 7 à 9 atomes de carbone.

4. Procédé de séparation en lit mobile simulé faisant appel au dispositif selon l'une quelconque des revendications 1 ou 2, dans lequel la charge à séparer est un mélange de normales et d'iso paraffines.

5. Procédé de séparation en lit mobile simulé faisant appel au dispositif selon l'une quelconque des revendications 1 ou 2, dans lequel la charge à séparer est un mélange de normales et d'iso oléfines.

6. Procédé de séparation en lit mobile simulé faisant appel au dispositif selon l'une quelconque des revendications 1 ou 2, dans lequel le fluide principal traversant ledit dispositif a une masse volumique comprise entre 600 et 950 kg/m³ et une viscosité comprise entre 0,1 et 0,6 cPo.

## Patentansprüche

1. Vorrichtung zum Verteilen eines Fluids, die mindestens ein Granulatbett einer mehrstufigen Kolonne speist, die eine Abfolge von Böden aufweist, wobei jeder Boden (P) ein Bett mit granulatförmigem Feststoff trägt, und in benachbarte, wie ein Meridian verlaufende, das heißt rechteckige, Platten unterteilt ist, die längs in gleicher Richtung ausgerichtet sind und die im Wesentlichen die gleiche Breite aufweisen, wobei die mit (Pa) bezeichneten Platten den gesamten Querschnitt der Säule bedecken, wobei die Vorrichtung mindestens auf einen Teil der Platten (Pa) des Bodens (P) Anwendung findet, wobei die Vorrichtung in einer Position P1 und in Fließrichtung des Fluids Folgendes umfasst:
a) ein Gitter oder eine perforierte Platte, die oberes Gitter (6) genannt wird, die dazu dient, das Partikelbett (2), das oberhalb des Bodens liegt, zu tragen,
b) ein Prallblech zum Sammeln (5), das in seiner Mitte offen ist,
c) eine Schikane (9), die zwischen dem Prallblech zum Sammeln (5) und dem Verteiler (7) in einer mit P1 bezeichneten Position angeordnet ist,
d) einen Verteiler (7), der aus einem Gitter oder einer perforierten Platte besteht, das bzw. die es ermöglicht, den von dem Boden kommenden Strom auf der Gesamtheit der Oberfläche des Partikelbettes, das sich unterhalb des Bodens befindet, umzuverteilen,
e) einen Strahlregler (8), der oberhalb oder unterhalb des Verteilers (7) angebracht ist, und an den Rändern des Bodens (Pa) angeordnet ist,
wobei der Abstand zwischen dem Ende der Schikane (9) und dem Rand des Bodens (P) im Bereich zwischen 5 und 200 mm liegt, wobei die Dicke der Schikane im Bereich zwischen 0,5 mm und 10 mm liegt.

2. Vorrichtung zur Verteilung eines Fluids, die mindestens ein Granulatbett einer mehrstufigen Säule speist, die eine Abfolge von Böden nach Anspruch 1 aufweist, wobei der Abstand zwischen dem Ende der Schikane (9) und dem Rand des Bodens (P) im Bereich zwischen 10 und 50 mm liegt, wobei die Dicke der Schikane im Bereich zwischen 1 und 3 mm liegt.

3. Verfahren zum Trennen im simulierten Bewegtbett, bei dem die Vorrichtung nach einem der Ansprüche 1 oder 2 eingesetzt wird, wobei die zu trennende Beschickung ein beliebiges Gemisch aus aromatischen Verbindungen mit 7 bis 9 Kohlenstoffatomen ist.

4. Verfahren zum Trennen im simulierten Bewegtbett, bei dem die Vorrichtung nach einem der Ansprüche 1 oder 2 eingesetzt wird, wobei die zu trennende Beschickung ein Gemisch aus normalen Paraffinen und Isoparaffinen ist.

5. Verfahren zum Trennen im simulierten Bewegtbett, bei dem die Vorrichtung nach einem der Ansprüche 1 oder 2 eingesetzt wird, wobei die zu trennende Beschickung ein Gemisch aus normalen Olefinen und Isoolefinen ist.

6. Verfahren zum Trennen im simulierten Bewegtbett, bei dem die Vorrichtung nach einem der Ansprüche 1 oder 2 eingesetzt wird, wobei das durch die Vorrichtung fließende Hauptfluid eine Dichte im Bereich zwischen 600 und 950 kg/m³ und eine Viskosität zwischen 0,1 und 0,6 cPo aufweist.

## Claims

1. A device for distributing a fluid supplying at least one granular bed of a multistage column having a succession of plates, each plate (P) supporting a bed of granular solid and being divided into adjacent meridional panels, i.e. rectangular, oriented along the same direction in length and having substantially the same width, said panels denoted (Pa), covering the whole of the column section, said device being applied to at least a portion of the panels (Pa) of the plate (P), said device comprising in apposition denoted P1 and following the fluid flow:
a)-a screen or perforated plate termed the upper screen (6) acting to support the bed of particles (2) located above the plate,
b)-a collection baffle (5) which is open at its center,
c)- a deflector (9) placed between the collection baffle (5) and the distributor (7), in a position denoted (P1),
d)-a distributor (7) composed of a screen or a perforated plate for re-distributing the flow leaving the panel over the entire surface of the bed of particles located below the panel, e)-a jet breaker (8) positioned above or below the distributor (7) and placed at the edges of the panel (Pa),
the distance between the end of the deflector (9) and the edge of the plate (P) being in the range 5 to 200 mm, the thickness of the deflector (9) being in the range 0.5 to 10 mm.

2. A device for distributing a fluid supplying at least one granular bed of a multistage column having a succession of plates, according to claim 1 in which the distance between the end of the deflector (9) and the edge of the plate (P) being in the range 10 to 50 mm, the thickness of the deflector (9) being in the range 1 to 3 mm.

3. A process for simulated moving bed separation using a device according to any one of claims 1 to 2, in which the feed to be separated is any mixture of aromatic compounds containing 7 to 9 carbon atoms.

4. A process for simulated moving bed separation using a device according to any one of claims 1 to 2, in which the feed to be separated is a mixture of normal and iso-paraffins.

5. A process for simulated moving bed separation using a device according to any one of claims 1 to 2, in which the feed to be separated is a mixture of normal and iso-olefins.

6. A process for simulated moving bed separation using a device according to any one of claims 1 to 2, in which the principal fluid passing through said device has a density in the range 600 to 950 kg/m³ and a viscosity in the range 0.1 to 0.6 cPo.
